# EUROPÄISCHE PATENTANMELDUNG

(11) **EP 2 282 194 A1**
(43) Veröffentlichungstag der Anmeldung: **09.02.2011**
(21) Anmeldenummer: 10010978.4
(22) Anmeldetag: 01.09.2006
(51) Int. Cl.: G01N 21/64, G01N 21/25, G01N 21/27

(54) **Vorrichtung zur Durchfürung von Echtzeit PCR-Reaktionen**

(30) Priorität: 13.09.2005 DE 102005043834
(62) Teilanmeldung aus: 06791787.2
(71) Anmelder: EPPENDORF AG, 22339 Hamburg (DE)
(72) Erfinder: Schirr, Andreas, 22049 Hamburg (DE); Eckert, Gerd, 22339 Hamburg (DE); Lapczyna, Markus, 22041 Hamburg (DE)
(74) Vertreter: Emmel, Thomas

(57) **Zusammenfassung**

Vorrichtung zur Durchführung von Real-Time PCR-Reaktionen, mit einem Thermocycler, der einen Reaktionsbereich mit mehreren temperierbaren Aufnahmen für Reaktionsgefäße aufweist, mit einer dem Reaktionsbereich zugeordneten, mehrere Leuchtdioden aufweisenden Beleuchtungseinrichtung, mit der Anregungslicht in die Aufnahmen strahlbar ist, mit einer Detektoreinrichtung, die in Abhängigkeit von einer gemessenen Lichtintensität Messwerte erzeugt, mit Optikeinrichtungen, die einen Strahlengang definieren, der von der Beleurhtungseinrichtung zu den Aufnahmen und von dort zu der Detelctoreinrichtung führt, mit einer Referenzeinrichtung, die durch Messung der Lichtintensität einer Leuchtdiode einen Referenzmesswert erzeugt, wobei die Referenzeinrichtung eine Referenzleuchtdiode aufweist, deren Licht hinter dem Reaktionsbereich in den Strahlengang eingekoppelt ist.

## Beschreibung

Die Erfindung betrifft eine Vorrichtung nach dem Oberbegriff des Anspruches 1.

Gattungsgemäße Vorrichtungen dienen zur Durchführung von Nucleinsäureamplifizierungsverfahren (im folgenden PCR-Reaktionen genannt), bei denen die Bildung der Amplifikationsprodukte (PCR-Produkte) während der PCR-Reaktionen optisch gemessen wird. Diese spezielle Form der PCR wird Real-Time PCR-Reaktion genannt.

Bei Real-Time PCR-Reaktionen werden in der Regel Versuchsansätze gemessen, die Fluoreszenzindikatoren enthalten, die nach Anregung Fluoreszenzsignale abgeben, deren Intensität abhängig von der Menge an gebildetem PCR-Produkt ist. Üblicherweise läßt sich bei Real-Time PCR-Reaktionen mit fortschreitender Reaktionsdauer die Zunahme der PCR-Produkte über eine Zunahme der Intensität der gemessenen Fluoreszenzsignale verfolgen.

Ein bekanntes Beispiel für einen geeigneten Fluoreszenzindikator ist z.B. der Farbstoff Sybrgreen, der sich unspezifisch in Doppelstrang-DNA einlagert und in eingelagertem Zustand ein Fluoreszenzsignal abgibt. Es gibt eine ganze Reihe weiterer geeigneter Fluoreszenzindikatoren, die dem Fachmann bekannt sind und auf die hier nicht im einzelnen eingegangen werden soll. Es wird ergänzend auf die Veröffentlichung von "Neusser; Transkript Laborwelt Nr. 2/2000; "Echtzeit-PCR-Verfahren zur Quantifizierung von PCR-Produkten"" verwiesen, die die unterschiedlichen Möglichkeiten für Real-Time PCR-Reaktionen ausführlich beschreibt.

Vorrichtungen, mit denen Real-Time PCR-Reaktionen durchgeführt werden können weisen üblicherweise einen Thermocycler auf mit einem Reaktionsbereich, in dem mehrere temperierbare Aufnahmen für Reaktionsgefäße vorgesehen sind. Weiterhin ist eine dem Reaktionsbereich zugeordnete Beleuchtungseinrichtung vorgesehen, die mehrere Leuchtdioden, üblicherweise pro Aufnahme jeweils eine Diode, aufweist. Weiterhin vorgesehen ist ein Detektor, der in Abhängigkeit von einer gemessenen Lichtintensität Meßwerte erzeugt. Der Detektor kann z.B. ein CCD-Chip oder ein Fotomultiplier sein bzw. enthalten.

Die Vorrichtung weist weiterhin geeignete Optikeinrichtungen auf, die einen von der Beleuchtungseinrichtung zu dem Reaktionsraum und von dort zu dem Detektor führenden Strahlengang definieren. Die Optikeinrichtungen umfassen z.B. einen zwischen Beleuchtungseinrichtung und Aufnahme angeordneten dichroitischen Spiegel, der das von der Beleuchtungseinrichtung ausgehende Anregungslicht zu den Aufnahmen passieren läßt und ein aus dem Reaktionsbereich emittierte langwelligeres Fluoreszenzsignal auf den z.B. seitlich angeordneten Detektor reflektiert. Üblicherweise sind noch eine Reihe weiterer z.B. dem Detektor vorgeschaltete Filter und Linsen etc. vorgesehen.

Ein Problem bei bekannten Real-Time PCR Vorrichtungen ist, dass Temperatur-oder auch Stromschwankungen die Messung beeinflussen können. Denkbar ist z.B., dass das von den Leuchtdioden erzeugte Anregungslicht mit zunehmender Betriebszeit schwächer wird oder dass bei Betrieb der Vorrichtung bei unterschiedlichen Temperaturen die optischen Einrichtungen eine Drift erfahren um nur einige Beispiele zu nennen.

Aus dere WO 01/35079 ist z.B. bekannt, dass zur Standardisierung der Leuchtdioden eine Referenzeinrichtung vorgesehen ist, die einen separaten Detektor in Form einer Fotodiode aufweist, mit der die Leuchtdioden gemessen und der gemessene Referenzwert mit dem Probenmesswert verrechnet wird.

Nachteilig an der bekannten Vorrichtung ist, dass eine Überprüfung des Detektors unterbleibt.

Aus der DE 20122266.3 ist bekannt, zur Kompensation eventueller thermischer Einflüße in der Vorrichtung einen Referenzlichtweg vorzusehen, der analog zu dem Messlichtweg verläuft, mit dem Unterschied, daß die dem Referenzlichtweg zugeordnete Leuchtdiode nicht einen PCR-Ansatz in einer Aufnahme beleuchtet sondern eine z.B. auf eine Aufnahme aufsetzbare Referenzfläche. Das von dieser Fläche reflektierte Licht wird vom Detektor ausgewertet, wobei Veränderungen während der PCR zur Korrektur der Meßwerte verwendet werden Die Vorrichtung ist relativ aufwändig.

Aufgabe der Erfindung ist es, ausgehend von dem Stand der Technik, eine Vorrichtung bereitzustellen, mit der sich eine eventuelle Messwertdrift in einfacher Weise erkennen und kompensieren läßt.

Gelöst wird die Aufgabe mit einer Vorrichtung, die die kennzeichnenden Merkmale des Anspruchs 1 aufweist.

Erfindungsgemäß ist demnach in der Vorrichtung eine Referenzeinrichtung vorgesehen, die eine von der Beleuchtungseinrichtung separate Referenzleuchtdiode aufweist, deren Licht hinter dem Reaktionsbereich in den Strahlengang eingekoppelt ist.

Vorteilhafte Ausgestaltungen der Erfindung sind in den Unteransprüchen angegeben.

Während bei den bekannten Vorrichtungen im wesentlichen lediglich eine Überprüfung der zur Messung der PCR-Ansätze verwendeten Leuchtdioden erfolgt, verwendet die Erfindung eine separate Leuchtdiode, um eventuelle auf Temperaturschwankungen bzw. Schwankungen in der Stromversorgung zurückgehende Messwertdriften zu quantifizieren und zu kompensieren..

Vorteilhafterweise wird als Referenzleuchtdiode eine Diode eingesetzt, deren Emissionsspektrum breiter ist als das der Leuchtdioden (14) der Beleuchtungseinrichtung.

In der Beleuchtungseinrichtung werden in der Regel Dioden eingesetzt, die z.B. schmalbandiges blaues Licht erzeugen mit einer Wellenlänge, die unterhalb der Detektionswellenlängen liegt, mit der in der Detektoreinrichtung vorgesehene Multiplier bestrahlt werden. Besonders vorteilhaft wird als Referenzleuchtdiode eine Diode vorgesehen, die breitbandig weisses Licht erzeugt. Mit einer derartigen Referenzleuchtdiode können alle Multiplier bei allen Filterstellungen der Detektoreinrichung direkt bestrahlt werden.

Unterschiede in der Temperaturdrift zwischen blauen und weissen Dioden können über zusätzliche Temperaturmessungen zuverlässig kompensiert werden. Es hat sich gezeigt, dass z.B. blaue und auch weisse Dioden innerhalb ihrer Gattung nur eine sehr geringe Streuung in der Temperaturdrift aufweisen.

Es ist natürlich auch denkbar eine Referenzleuchtdiode zu verwenden, die bezüglich ihrer Eigenschaften mit den Leuchtdioden der Beleuchtungseinrichtung übereinstimmt. Verwendet man z.B. eine Referenzleuchtdiode, die bezüglich ihrer Spezifikation und der Betriebsbedingungen mit den Leuchtdioden übereinstimmt, so kann man davon ausgehen, dass Einflüsse, die bei den Leuchtdioden eine Messwertdrift hervorrufen dies in gleicher Weise auch bei der Referenzleuchtdiode tun, so dass eine direkte Kompensation der Messergebnisse möglich ist.

In einer weiteren vorteilhaften Ausgestaltung ist eine der Referenz-Leuchtdiode nachgeschaltete optische Filtereinrichtung, insbesondere ein Neutralglasfilter, vorgesehen. Mittels der optischen Filtereinrichtung kann die Intensität des von der Referenz-Leuchtdiode abgegebenen Lichts vor Einkopplung in den Strahlengang auf eine gewünschte Intensität eingestellt werden. In der Regel wird z.B. ein Neutralglasfilter gewählt, das die Intensität so einstellt, dass bei mittlerer Empfindlichkeit des Detektors ein optimiertes Referenzsignal zu den Multipliern gelangt, das stark genug ist für ein günstiges Signal/Rausch-Verhältnis und gleichzeitig nicht im Sättigungsbereich liegt.

Erfindungsgemäß ist vorgesehen, dass die Einkopplung des Lichts der Referenz-leuchtdiode in den Strahlengang hinter dem Reaktionsraum erfolgt.

Im Rahmen der Erfindung ist es möglich, das Licht an einer beliebigen Stelle des Strahlenganges zwischen Reaktionsbereich und Detektor einzukoppeln.

Möchte man im wesentlichen die Detektorleistung bzw. die Leistung eines eventuell vorgesehenen Multipliers bezüglich eventueller Driften kompensieren, dann reicht es aus, dass das Licht z.B. unmittelbar vor dem Detektor eingekoppelt wird.

Möchte man dagegen auch eine eventuelle auf dem Detektor vorgeschaltete optische Einrichtungen zurückgehende Messwertdrift berücksichtigen, so kann das Licht der Referenzleuchtdiode entsprechend an einem früheren Punkt des Strahlengangs eingekoppelt werden.

Denkbar ist, das von der Referenz-Leuchtdiode ausgehende Licht mittels eines Spiegels oder anderer geeigneter optischer Einrichtungen, z.B. einen der Referenzleuchtdiode zugeordneten Lichtleiter in den Strahlengang einzukoppeln.

Die zuletzt angesprochene Verwendung eines Lichtleiters bietet sich insbesondere bei solchen Vorrichtungen an, deren Optikeinrichtungen Lichtleiter aufweisen, mit denen das aus dem Reaktionsraum emittierte Fluoreszenzlicht aufgenommen wird. Die Lichteintrittsflächen der Lichtleiter sind dabei z.B. jeweils einer Aufnahme zugeordnet, während die Lichtaustrittsflächen nebeneinander gebündelt angeordnet sind. Bei solchen Vorrichtungen kann mit geringem Aufwand ein weiterer Lichtleiter vorgesehen werden, dessen Lichteintrittsöffnung der Referenzleuchtdiode zugeordnet ist und dessen Lichtaustrittsöffung insbesondere inmitten der anderen Lichtleiter liegt.

Üblicherweise werden in bekannten Vorrichtungen die Aufnahmen jeweils nacheinander einzeln angeregt und gemessen. Pro PCR-Reaktion erfolgen dabei eine Reihe von Messdurchläufen, in denen die Aufnahmen bzw. die in den Aufnahmen befindlichen Ansätze gemessen werden. Die erfindungsgemäße Referenz-leuchtdiode kann dabei in der gleichen Frequenz und mit übereinstimmender Lcuchtdauer wie die Leuchtdioden eingeschaltet werden, so dass eine vergleichbare Belastung und Abnutzung auftritt. Bei dieser Ansteuerung kann jeder Messdurchlauf bezüglich einer eventuellen Drift kompensiert werden kann. Es hat sich jedoch gezeigt, dass auch lediglich 2 Referenzmessungen, eine vor der und eine nach der PCR-Reaktion, ausreichend sind.

Häufige Ursache für eventuelle Abweichungen in Messergebnissen sind Schwankungen in der Stromversorgung. In einer vorteilhaften Ausgestaltung sind Referenzleuchtdiode und die Leuchtdioden der Beleuchtungseinrichtung daher an derselben Stromquelle angeschlossen dergestalt, dass alle Dioden eine übereinstimmende Stromversorgung erfahren. Dadurch, dass die Referenzleuchtdiode bei dieser Ausgestaltung gleichermassen beeinflusst wird, rechnen sich Stromschwankungen heraus.

Im folgenden soll die Erfindung anhand einer Figur näher erläutert werden, die ein Ausführungsbeispiel 10 der erfindungsgemäßen Vorrichtung zeigt.

Die Vorrichtung 10 weist einen schematisch dargestellten üblichen Thermocycler 11 mit Aufnahmen 12 auf. Im Betrieb werden in die Aufnahmen 12 nicht dargestellte Reaktionsgefäße eingesetzt, in denen jeweils ein PCR-Ansatz mit dem oben erwähnten Fluoreszenzindikator, bzw. den Indikatoren enthalten ist.

Auf den Thermocycler 11 ist ein Deckelgehäuse 13 aufgesetzt mit einer Beleuchtungseinrichtung mit mehreren Leuchtdioden 14. Jeweils eine Leuchtdiode 14 ist einer Aufnahme 12 zugeordnet. Vorzugsweise sind die Leuchtdioden 14 arrayförmig angeordnet. Bei der Messung werden die Leuchtdioden 14 vorzugsweise so geschaltet, daß immer nur jeweils eine zugeordnete Aufnahme 12 bestrahlt wird.

Ein beispielhafter Lichtweg ist mit 15, 15' dargestellt. Das Licht 15 wird von der Leuchtdiode 14 abgestrahlt, und passiert dann zunächst einen Kurzpaßfilter 16, mit dem langwellige Anteile herausgefiltert werden sollen. Danach tritt das Licht 15 durch einen Strahlteiler 17 hindurch, der in dieser Richtung vorzugsweise vollständig durchlässig ist.

Wie oben mehrfach ausgeführt, soll das von der Leuchtdiode 14 abgestrahlte Licht 15 einen, in einem PCR-Ansatz in der Aufnahme 12 befindlichen Fluoreszenzindikator anregen, woraufhin dieser ein Fluoreszenzsignal 15' emittiert. Der Strahlteiler 17 ist so beschaffen, daß das Fluoreszenzsignal 15' zur Seite hin reflektiert wird.

Vorzugsweise wird als Strahlenteiler 17 ein dichroitischer Spiegel eingesetzt, der das Anregungslicht durchläßt, das emittierte längerwellige Fluoreszenzsignal jedoch reflektiert.

Das reflektierte Fluoreszenzsignal 15' wird dann von einem Detektor 27 erfaßt. Dem Detektor 27 sind Optikeinrichtungen vorgeschaltet, mit denen das Fluoreszenzsignal 15' auf dem Detektor 27 abgebildet werden kann. Das detektierte Signal wird mittels einem, in der Regel mehreren jeweils z.B. wellenlängespezifischen nicht dargestellten Multipliern verstärkt.

Im einzelnen umfaßt die Optikeinrichtungen eine Reihe von Lichtleitfasern 20 mit Lichteintrittsflächen 21, die jeweils einer Aufnahme 12 bzw. den aus den Aufnahmen 12 emittierten und am Strahlteiler 17 reflektierten Fluoreszenzsignalen 15' zugeordnet sind.

Vorzugsweise sind die Eintrittsflächen 21 wiederum wie die Leuchtdioden 14 arrayförmig angeordnet.

Erfindungsgemäß ist nun in dem Deckelgehäuse in räumlicher Nähe zu den Leuchtdioden 14 eine weitere Diode als Referenz-Leuchtdiode 140 vorgesehen. Das von der Referenz-Leuchtdiode 140 erzeugte Licht wird von einem Spiegel 220 seitlich abgelenkt, passiert dann ein Neutralglasfilter 230 und gelangt zu einer Lichteintrittsfläche 210 einer als Referenzlichtleitfaser 200 dienenden Lichtleitfaser. Bei dem Spiegel 220 kann es sich z.B. um einen Keramikspiegel handeln. Das Neutralglasfilter dient dazu, die Intensität des Referenzsignals auf einen gut detektierbaren Wert einzustellen.

Die Lichtleitfasern 20 und die Referenzlichtleitfaser 200 sind an ihrem Austrittsende zu einem Bündel 23 zusammengefaßt, wobei vorteilhafterweise um seitliche Abstrahleffekte zu minimieren, das Austrittsende der Referenzlichtleitfaser 200 mittig im Bündel 23 liegt.

Durch die Bündelung wird erreicht, daß die Signale aus allen Aufnahmen 12 relativ dicht nebeneinander austreten. Wie oben erwähnt, ist eine eng begrenzte Austrittsfläche erforderlich, um die austretenden Lichtstrahlen zu einem Bündel zu kollimieren, dessen Ausbreitungsrichtungen sich nur wenig unterscheiden. Dies ist insbesondere dann von Vorteil, wenn die nachfolgenden Filter Interferenzfilter sind, deren spektrale Durchlaßcharakteristik abhängig vom Einfallswinkel auf das Filter ist.

Das Fluoreszenzsignal 15' und das Licht der Referenzleuchtdiode 140 wird von dem Lichtleiterbündel 23 dann über weitere Optikeinrichtungen, z.B. eine Linse 24, einen Langpaßfilter 25 und eine weitere Linse 26 auf den Detektor 27 abgebildet.

Bei der gezeigten Ausführungsform läßt sich mit konstruktiv relativ geringem Aufwand eine Referenzleuchtdiode vorsehen und in den Strahlengang einkoppeln.

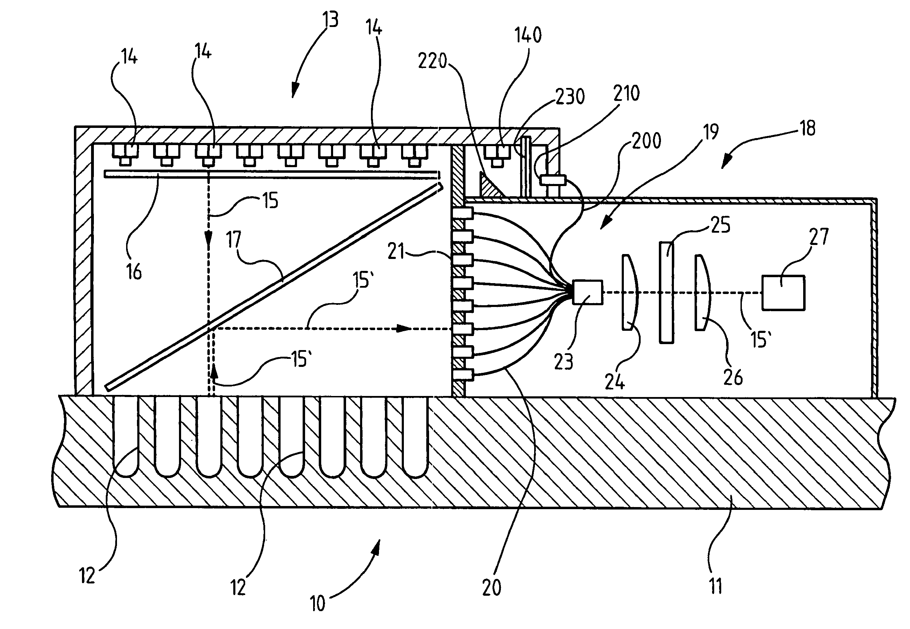

## Patentansprüche

1. Vorrichtung zur Durchführung von Real-Time PCR-Reaktionen, mit einem Thermocycler, der einen Reaktionsbereich mit mehreren temperierbaren Aufnahmen für Reaktionsgefäße aufweist, mit einer dem Reaktionsbereich zugeordneten, mehrere Leuchtdioden aufweisenden Beleuchtungseinrichtung, mit der Anregungslicht in die Aufnahmen strahlbar ist, mit einer Detektoreinrichtung, die in Abhängigkeit von einer gemessenen Lichtintensität Messwerte erzeugt, mit Optikeinrichtungen, die einen Strahlengang definieren, der von der Beleuchtungseinrichtung zu den Aufnahmen und von dort zu der Detektoreinrichtung führt, mit einer Referenzeinrichtung, die durch Messung der Lichtintensität einer Leuchtdiode einen Referenzmesswert erzeugt, **dadurch gekennzeichnet, dass** die Referenzeinrichung eine Referenzleuchtdiode (140) aufweist, deren Licht hinter dem Reaktionsbereich in den Strahlengang (15, 15') eingekoppelt ist.

2. Vorrichtung nach Anspruch 1, **dadurch gekennzeichnet, dass** die Referenzleuchtdiode (140) eine von der Beleuchtungseinrichtung separate Diode ist.

3. Vorrichtung nach Anspruch 1 oder 2, **dadurch gekennzeichnet, dass** die Referenzleuchtdiode (140) eine in dem Deckelgehäuse in räumlicher Nähe zu den Leuchtdioden (14) vorgesehene weitere Diode ist.

4. Vorrichtung nach einem der vorhergehenden Ansprüche, **dadurch gekennzeichnet, dass** das Licht der Referenzleuchtdiode (140) in den von den Aufnahmen zu der Detektoreinrichtung führenden Strahlengang (15') unmittelbar vor der Detektoreinrichtung eingekoppelt ist.

5. Vorrichtung nach nach einem der vorhergehenden Ansprüche, **dadurch gekennzeichnet, dass** als Referenz-Leuchtdiode (140) eine Diode vorgesehen ist, deren Emissionsspektrum breiter ist als das der Leuchtdioden (14) der Beleuchtungseinrichtung.

6. Vorrichtung nach Anspruch 5, **dadurch gekennzeichnet, dass** als Referenz-Leuchtdiode (140) eine Diode vorgesehen ist, die weisses Licht erzeugt.

7. Vorrichtung nach einem der vorhergehenden Ansprüche, **dadurch gekennzeichnet, dass** eine der Referenz-Leuchtdiode (140) nachgeschaltete optische Filtereinrichtung (230), insbesondere ein Neutralglasfilter, vorgesehen ist.

8. Vorrichtung nach einem der vorhergehenden Ansprüche, **dadurch gekennzeichnet, dass** das von der Referenz-Leuchtdiode (140) ausgehende Licht mittels einer zugeordneten Lichtleitfaser (200) in den Strahlengang eingekoppelt ist.

9. Vorrichtung nach einem der vorhergehenden Ansprüche, **dadurch gekennzeichnet, dass** die Referenz-Leuchtdiode (140) und die Leuchtdioden (14) der Beleuchtungseinrichtung an dieselbe Stromquelle angeschlossen sind.
